# FASCICULE DE BREVET EUROPEEN

(11) **EP 4 247 652 B1**
(45) Date de publication et mention de la délivrance du brevet: **24.06.2026**
(21) Numéro de dépôt: 21810891.8
(22) Date de dépôt: 18.11.2021
(51) Int. Cl.: B60H 1/00

(54) **INSTALLATION DE VENTILATION, CHAUFFAGE ET/OU CLIMATISATION POUR UN VÉHICULE**
BELÜFTUNGS-, HEIZUNGS- UND/ODER KLIMAANLAGE FÜR EIN FAHRZEUG
VENTILATION, HEATING AND/OR AIR CONDITIONING INSTALLATION FOR A VEHICLE

(30) Priorité: 20.11.2020 FR 2011955
(43) Date de publication de la demande: 27.09.2023
(73) Titulaire: Valeo Electrification, 95892 Cergy Pontoise (FR)
(72) Inventeur: GONTIER, Cyril, 78322 Le Mesnil-Saint-Denis Cedex (FR); ROUSSEAU, Yves, 78322 Le Mesnil-Saint-Denis Cedex (FR); PIERRES, Philippe, 78322 Le Mesnil-Saint-Denis Cedex (FR)
(74) Mandataire: Valeo Powertrain Systems
(86) Numéro de dépôt international: PCT/EP2021/082230
(87) Numéro de publication internationale: WO 2022/106585

(56) Documents cités:
- JP-A- 2002 002 250
- KR-A- 20100 035 984
- KR-A- 20100 091 660
- KR-B1- 101 129 810

## Description

La présente invention se rapporte au domaine des installations de ventilation, chauffage et/ou climatisation pour un véhicule automobile. Plus particulièrement, la présente invention se rapporte au domaine des moyens de guidage d'air agencés au sein de ces installations de ventilation, chauffage et/ou climatisation.

De façon connue, les véhicules automobiles sont couramment équipés de systèmes de traitement d'air qui permettent de gérer la température globale de l'air dans les habitacles de tels véhicules. Notamment, en cas de températures extérieures froides, ces systèmes de traitement d'air permettent de chauffer de l'air extérieur afin de l'envoyer dans l'habitacle pour chauffer ce dernier et en cas de températures extérieures chaudes, ces systèmes de traitement d'air permettent de refroidir de l'air extérieur afin de l'envoyer dans l'habitacle pour en faire descendre la température. Ces systèmes de traitement d'air peuvent en outre être utilisés pour désembuer les surfaces vitrées de l'habitacle afin d'assurer une bonne visibilité au conducteur.

Ces systèmes comprennent classiquement un boîtier dans lequel sont reçus au moins un organe de ventilation qui permet de générer un flux d'air, par exemple en aspirant de l'air extérieur, et au moins un échangeur de chaleur parcouru par un fluide caloporteur ou un fluide caloporteur, ce qui permet de traiter thermiquement le flux d'air qui circule dans le boîtier.

Une fois traité thermiquement, le flux d'air est dirigé vers les différents aérateurs du véhicule en fonction des demandes des passagers de ce véhicule. A cette fin, ces systèmes de traitement d'air peuvent comprendre un ou plusieurs moyens de guidage du flux d'air. Par exemple, ces moyens de guidage peuvent être des volets réglables et/ou des écopes comme divulgué dans le document KR 101 129 810 B1.

Un inconvénient des systèmes de traitement d'air actuellement mis en œuvre réside dans le fait qu'ils tendent à générer un phénomène de stratification du flux d'air. Autrement dit, ces systèmes tendent à créer des disparités de températures entre les différentes sorties d'air. De telles disparités ne sont pas souhaitables car elles complexifient la gestion de la température moyenne au sein de l'habitacle du véhicule.

La présente invention s'inscrit dans ce contexte en proposant une installation de ventilation, chauffage et/ou climatisation dans laquelle la répartition de l'air entre les différentes sorties est réalisée, au moins partiellement, au moyen d'un organe disposé de telle sorte à capter un flux d'air mélangé dans toute l'étendue transversale de la chambre de mélange, évitant ainsi la captation d'une couche chaude ou d'une couche froide qui peut subsister dans le flux d'air mélangé.

Un objet de la présente invention concerne ainsi une installation de ventilation, chauffage et/ou climatisation pour un véhicule, comprenant au moins un bloc de distribution destiné à être parcouru par un flux d'air, le bloc de distribution comprenant au moins un moyen de traitement thermique du flux d'air, une chambre de mélange, un conduit d'air froid qui s'étend d'une bouche d'admission d'air dans le bloc de distribution à une première entrée de la chambre de mélange et un conduit d'air chaud qui s'étend du moyen de traitement thermique à une deuxième entrée de la chambre de mélange, le bloc de distribution comprenant au moins une première sortie d'air et au moins une deuxième sortie d'air aérauliquement raccordées à la chambre de mélange, la première sortie d'air et la deuxième sortie d'air étant respectivement délimitées par au moins deux bords longs et par au moins deux bords courts sensiblement perpendiculaires aux deux bords longs, la bouche d'admission d'air, la première entrée dans la chambre de mélange et la deuxième entrée dans la chambre de mélange étant disposées dans cet ordre le long d'une direction d'extension principale d'au moins l'un des bords courts qui participent à délimiter la première sortie d'air et la bouche d'admission d'air, la première sortie d'air et la deuxième sortie d'air étant disposées dans cet ordre le long de la direction d'extension principale d'au moins l'un des bords courts qui participent à délimiter la première sortie d'air. Selon l'invention, l'installation de ventilation, chauffage et/ou climatisation comprend au moins une écope agencée en travers de la première sortie d'air en s'étendant d'un bord long à l'autre bord long de la première sortie, l'écope étant configurée pour guider un flux d'air mélangé vers la deuxième sortie d'air. On entend ici par « flux d'air mélangé » un flux d'air formé d'air issu du canal d'air froid et d'air issu du canal d'air chaud.

On comprend donc qu'une première partie du flux d'air mélangé quitte le bloc de distribution par la première sortie d'air et qu'une deuxième partie de ce flux d'air mélangé quitte le bloc de distribution par la deuxième sortie d'air. Selon l'invention, l'écope s'étend principalement selon une direction transversale à une direction de la première partie du flux d'air mélangé et elle présente par exemple un profil courbé de sorte à diriger la deuxième partie du flux d'air mélangé vers la deuxième sortie d'air.

Ainsi, l'écope agencée en travers de la première sortie d'air formée dans le bloc de distribution de l'installation de ventilation, chauffage et/ou climatisation selon l'invention permet d'homogénéiser la température de la première partie du flux d'air mélangé qui quitte le bloc de distribution par la première sortie d'air et la température de la deuxième partie de ce flux d'air mélangé qui quitte le bloc de distribution par la deuxième sortie d'air.

Selon l'invention, l'écope présente au moins un bord libre qui s'étend principalement selon une direction perpendiculaire aux bords longs de la première sortie d'air entre lesquels elle s'étend. Autrement dit, ce bord libre s'étend parallèlement aux bords courts qui délimitent cette première sortie d'air.

Selon une caractéristique de l'invention, le bloc de distribution est configuré pour qu'une première partie du flux d'air mélangé sorte par la première sortie d'air selon une première direction, tandis qu'une deuxième partie de ce flux d'air mélangé sort par la deuxième sortie d'air selon une deuxième direction, la première direction étant sécante à la deuxième direction. Par exemple, la première direction de la première partie du flux d'air mélangé peut être transversale à un plan dans lequel s'inscrivent les deux bords longs et les deux bords courts qui participent à délimiter la première sortie d'air. Autrement dit, la première direction de la première partie du flux d'air mélangé est transversale à un plan d'extension principal d'une section de la première sortie d'air. Avantageusement, on pourra prévoir que la deuxième direction de la deuxième partie du flux d'air mélangé soit transversale à un plan d'extension principal d'une section de la deuxième sortie d'air.

Selon un exemple de mise en œuvre de l'invention, l'écope peut présenter une forme concave, vue depuis un volume interne du bloc de distribution de l'installation de ventilation, chauffage et/ou climatisation. Selon l'invention, ce volume interne est défini par une paroi périphérique du bloc de distribution et ce volume interne loge l'au moins un moyen de traitement thermique. Avantageusement, une telle forme de l'écope lui permet de diriger au moins la deuxième partie du flux d'air mélangé vers la deuxième sortie d'air en diminuant d'une part les pertes de charge et en réduisant d'autre part les nuisances acoustiques générées par l'écope.

Selon l'invention, la première sortie d'air peut est séparée en une sortie centrale destinée à alimenter un aérateur central du véhicule et en au moins une première sortie latérale destinée à alimenter un aérateur latéral du véhicule, la sortie centrale étant séparée de la sortie latérale par une première paroi de séparation qui s'étend dans un plan sécant à un plan d'extension principal de l'écope, la paroi de séparation s'étendant entre les deux bords longs qui participent à délimiter la première sortie d'air. Selon l'invention, l'écope fait saillie de la paroi de séparation. Avantageusement, l'écope peut être issue de matière avec la paroi de séparation de laquelle elle fait saillie, c'est-à-dire que la paroi de séparation et l'écope forment un unique ensemble qui ne peut être séparé sans entrainer la détérioration de l'écope et/ou de la paroi de séparation. Autrement dit, on comprend que la paroi de séparation et l'écope peuvent former un ensemble qui présente une conformation générale en L.

Selon l'invention, l'écope est agencée dans le prolongement d'au moins un des bords longs de la deuxième sortie d'air. Selon l'invention, la première paroi de séparation est agencée dans le prolongement d'au moins un des bords courts de la deuxième sortie d'air.

Selon un exemple de réalisation de l'invention, l'installation de ventilation, chauffage et/ou climatisation comprend au moins deux parois de séparation, la première paroi de séparation délimitant la sortie centrale destinée à alimenter l'aérateur central du véhicule d'une première sortie latérale destinée à alimenter un premier aérateur latéral du véhicule et une deuxième paroi de séparation délimitant la sortie centrale d'une deuxième sortie latérale destinée à alimenter un deuxième aérateur latéral du véhicule. Selon une caractéristique de cet exemple de réalisation, la première paroi de séparation est agencée dans le prolongement d'un premier bord court de la deuxième sortie d'air et la deuxième paroi de séparation est agencée dans le prolongement d'un deuxième bord court de la deuxième sortie d'air. Avantageusement, une première distance mesurée entre les deux parois de séparation est équivalente à une deuxième distance mesurée entre les deux bords courts qui participent à délimiter la deuxième sortie d'air, ces distances étant mesurées perpendiculairement à au moins un de ces deux bords courts. Optionnellement, l'installation de ventilation, chauffage et/ou climatisation peut comprendre au moins deux écopes, la première écope faisant saillie de la première paroi de séparation et une deuxième écope faisant saillie de la deuxième paroi de séparation. Il est entendu que la première écope et la deuxième écope peuvent respectivement comprendre tout ou partie des caractéristiques décrites ci-dessus en référence à « l'écope ». Ainsi, la première écope peut être issue de matière avec la première paroi de séparation et la deuxième écope peut être issue de matière avec la deuxième paroi de séparation. Alternativement, les écopes et les parois de séparation peuvent être séparées puis rendues solidaires par tout moyen connu, sans sortir du contexte de la présente invention.

Lorsque l'installation de ventilation, chauffage et/ou climatisation comprend deux écopes, un rapport entre une section de ces deux écopes et une section de la première sortie d'air mesurée entre les bords longs et les deux parois de séparation est compris entre 0,13 et 0,20. Également, on pourra prévoir qu'un rapport entre la section des deux écopes et une section de la première sortie d'air mesurée entre les bords longs et les bords courts de cette première sortie d'air est compris entre 0,07 et 0,12.

D'autres caractéristiques, détails et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[Fig. 1] est une vue de face, une installation de ventilation, chauffage et/ou climatisation selon un exemple de réalisation de la présente invention ;
[Fig. 2] est une vue, selon une coupe transversale, d'un bloc de distribution de l'installation de ventilation chauffage et/ou climatisation selon l'exemple de réalisation illustré sur la figure 1 ;
[Fig. 3] illustre partiellement et en perspective le bloc de distribution de l'installation de ventilation, chauffage et/ou climatisation selon l'invention ;
[Fig. 4] est une vue de détails prise sur la figure 2, d'une portion du bloc de distribution de l'installation de ventilation, chauffage et/ou climatisation dans laquelle sont formées au moins une première sortie d'air et une deuxième sortie d'air.

Dans la suite de la description, les termes « longitudinal », « transversal » et « vertical » se réfèrent à l'orientation de l'objet concerné dans un repère L, V, T illustré sur les figures et dans lequel une direction longitudinale est parallèle à un axe longitudinal L, une direction verticale est parallèle à un axe vertical V et une direction transversale est parallèle à un axe transversal T, l'axe longitudinal L, l'axe vertical V et l'axe transversal T étant perpendiculaires deux à deux. Dans la description, une coupe transversale est réalisée selon un plan transversal et vertical, c'est-à-dire un plan dans lequel s'inscrivent l'axe transversal et l'axe vertical du trièdre illustré.

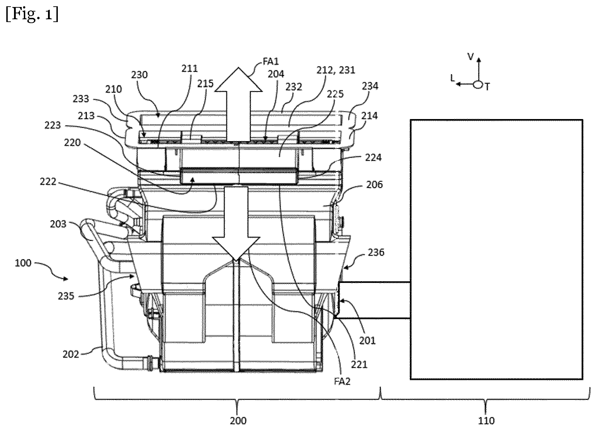

La figure 1 illustre, vue de face, une installation de ventilation, chauffage et/ou climatisation 100 selon un exemple de réalisation de l'invention. Dans la suite de la description, les termes « installation de ventilation, chauffage et/ou climatisation » et « installation » seront utilisés sans distinction.

Cette installation 100 comprend au moins un bloc de distribution 200 et peut éventuellement comprendre au moins un bloc de ventilation 110. Le cas échéant, ce bloc de ventilation 110 loge au moins un dispositif de ventilation configuré pour générer un flux d'air et il comprend ainsi au moins une entrée d'air et au moins un orifice d'évacuation d'air, l'entrée d'air étant en communication avec un environnement extérieur à l'installation 100 et l'orifice d'évacuation d'air étant quant à lui en communication avec une bouche d'admission 201 du bloc de distribution 200. Autrement dit, l'orifice d'évacuation d'air du bloc de ventilation 110 est confondu avec une entrée d'air du bloc de distribution 200. Le bloc de ventilation 110 étant ici représenté de manière schématique, ni le dispositif de ventilation, ni l'entrée d'air, ni l'orifice d'évacuation d'air ne sont représentés.

Par exemple, le dispositif de ventilation peut être un dispositif de ventilation à volute configuré pour aspirer un flux d'air selon une première direction axiale et pour le propulser selon une deuxième direction radiale, c'est-à-dire que cette deuxième direction est perpendiculaire, ou sensiblement perpendiculaire à la première direction. Il est entendu qu'il ne s'agit que d'un exemple de réalisation et que tout autre type de dispositif de ventilation connu peut être utilisé sans sortir du contexte de la présente invention.

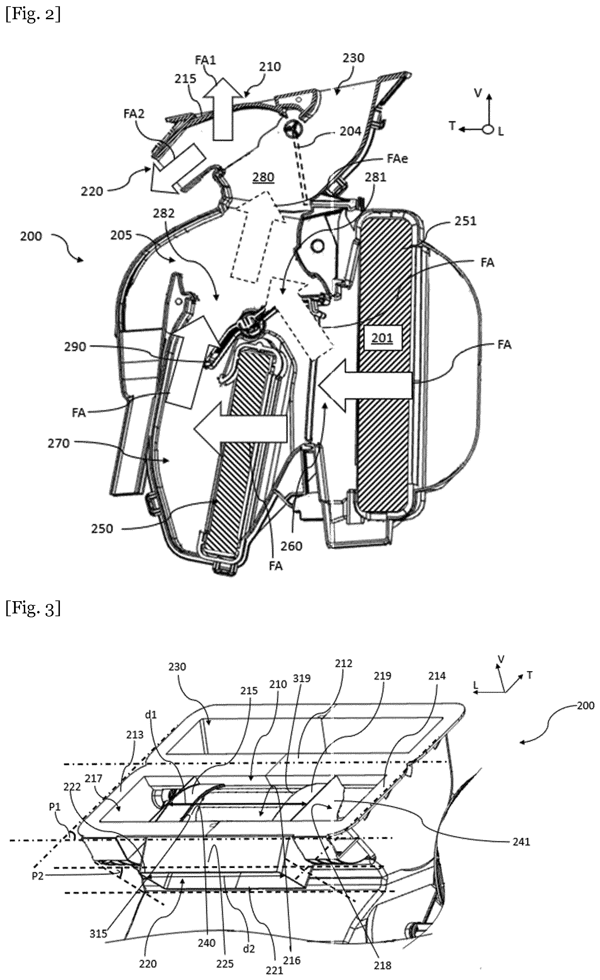

Le bloc de distribution 200 comprend une paroi périphérique 206 qui définit un volume interne dans lequel est logé au moins un moyen de traitement thermique 250 du flux d'air. Tel que partiellement représenté sur la figure 2 ce moyen de traitement thermique 250 comprend un échangeur thermique agencé sur un circuit de fluide caloporteur et cet échangeur thermique est adapté pour opérer un échange de chaleur entre le flux d'air et le fluide caloporteur. Le circuit de fluide caloporteur s'étend quant à lui principalement en dehors du volume interne. Par exemple, le circuit de fluide caloporteur comprend le moyen de traitement thermique configuré pour réchauffer le flux d'air et au moins un échangeur de chaleur 251 - également visible sur la figure 2 - quant à lui configuré pour opérer un échange de chaleur entre le fluide caloporteur et le flux d'air de sorte à refroidir ce flux d'air. Tel que représenté sur la figure 2, cet échangeur de chaleur 251 est également reçu dans le volume interne du bloc de distribution.

La figure 1 montre également une conduite d'arrivée 202 du fluide caloporteur et une conduite d'évacuation 203 de ce fluide caloporteur, cette conduite d'arrivée 202 et cette conduite d'évacuation 203 étant toutes deux connectées fluidiquement au moyen d'échange thermique.

Selon l'invention, au moins deux sorties d'air sont formées dans la paroi périphérique 206 du bloc de distribution 200. Une première sortie d'air 210 est ainsi adaptée pour être reliée au moins à un aérateur central du véhicule auquel est destinée l'installation 100 selon l'invention, et une deuxième sortie d'air 220 est quant à elle adaptée pour être reliée à un ou plusieurs aérateurs arrière de ce véhicule. Il entendu que les adjectifs utilisés pour qualifier les différents aérateurs du véhicule se réfèrent à une compartimentation classique de l'habitacle du véhicule dans lequel l'avant est formé par une partie de l'habitacle la plus proche de l'avant du véhicule et dans lequel l'arrière est formé par une partie de cet habitacle la plus proche de l'arrière du véhicule. Selon l'exemple illustré ici, le bloc de distribution 200 comprend en outre au moins une troisième sortie d'air 230 adaptée pour être reliée à un aérateur agencé en pied de pare-brise dans le véhicule, autrement dit cet aérateur permet de dégivrer et/ou désembuer le pare-brise lorsque cela est nécessaire. Enfin, le bloc de distribution 200 comprend une quatrième sortie d'air 235 et une cinquième sortie d'air 236 toutes deux adaptées pour être reliées à un aérateur agencé en pied du pare-brise arrière du véhicule.

Tel que détaillé ci-dessous, en référence à la figure 2, le flux d'air généré par le dispositif de ventilation quitte le bloc de distribution 200 selon une direction transversale, avantageusement perpendiculaire, à un plan d'extension principal d'une section de la sortie d'air concernée.

Chaque sortie d'air 210, 220, 230, est délimitée par au moins quatre bords qui s'inscrivent, respectivement, dans le plan d'extension principal de la section de la sortie d'air concernée. Autrement dit, l'ensemble des quatre bords qui délimitent une sortie d'air s'étendent, respectivement, selon des directions transversales, avantageusement perpendiculaires, à la direction du flux d'air qui quitte la sortie d'air susmentionnée. Tel que représenté, le flux d'air quitte la première sortie 210 selon une première direction FA1 de déplacement et le flux d'air qui quitte la deuxième sortie 220 selon une deuxième direction FA2 de déplacement.

Selon l'exemple illustré, les sorties d'air 210, 220, 230 formées dans la paroi périphérique 206 du bloc de distribution 200 présentent des sections rectangulaires, ou sensiblement rectangulaires, c'est-à-dire que chaque sortie d'air 210, 220, 230 est délimitée par au moins deux bords longs 211, 212, 221, 222, 231, 232 parallèles entre eux et par au moins deux bords courts 213, 214, 223, 224, 233, 234 parallèles entre eux et qui relient les deux bords longs concernés, bords courts et bords longs étant sensiblement, voire strictement, perpendiculaire. Selon l'orientation donnée aux figures, les deux bords longs 211, 212 qui participent à définir la première sortie d'air 210 s'étendent selon des directions longitudinales et les deux bords courts 213, 214 qui participent à définir la première sortie d'air 210 s'étendent selon des directions transversales.

Par ailleurs, la deuxième sortie d'air 220 est formée à une extrémité libre d'un canal 225 qui s'étend, au moins en partie, depuis l'un des bords longs 211 qui participent à délimiter la première sortie d'air 210, en éloignement de cette première sortie d'air 210 et également en éloignement de la troisième sortie d'air 230. Il résulte de cet agencement qu'un plan d'extension principal P1 de la section de la première sortie d'air 210 est sécant à un plan d'extension principal P2 de la section de la deuxième sortie d'air 220. Ces plans d'extension principaux P1, P2 des sections des première et deuxième sorties d'air 210, 220 sont par exemple représentés sur la figure 3.

En outre, selon l'exemple illustré, la première sortie d'air 210 et la troisième sortie d'air 230 présentent un bord commun 212, 231, en l'espèce formé par l'un des bords longs qui participent à délimiter ces première et troisième sorties d'air 210, 230. Tel que visible sur la figure 3, une section de la troisième sortie d'air 230 s'étend également dans le plan d'extension P1 de la section de la première sortie d'air 210.

On comprend de ce qui précède que la deuxième sortie d'air 220 et la troisième sortie d'air 230 sont réparties transversalement de part et d'autre de la première sortie d'air 210.

Tel que partiellement visible sur la figure 1, au moins un volet réglable 204 est agencé dans le volume interne du bloc de distribution 200 de sorte à guider le flux d'air qui circule dans ce volume interne, vers l'une ou l'autre des sorties d'air 210, 220, 230 évoquées ci-dessus.

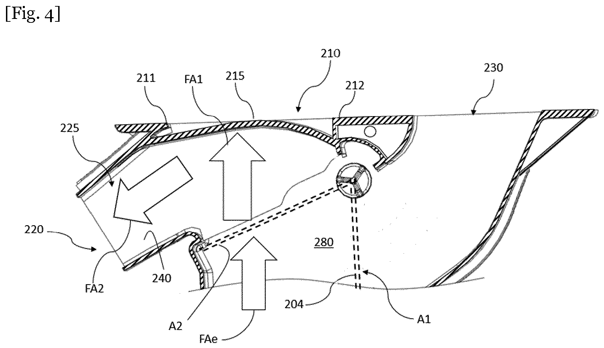

Selon l'invention, au moins une écope 215 est agencée en travers de la première sortie 210. Cette écope 215 est plus particulièrement décrite ci-dessous en référence aux figures 3 et 4.

La figure 2 est une vue en coupe transversale du bloc de distribution 200, cette coupe transversale étant réalisée selon un plan transversal qui passe par l'écope 215. Cette figure 2 rend ainsi particulièrement visible le volume interne 205 du bloc de distribution 200 ainsi que le moyen d'échange thermique 250 et l'échangeur de chaleur 251 reçus dans ce volume interne 205. Le bloc de distribution 200 pourrait toutefois être dépourvu de l'échangeur de chaleur 251 sans sortir du contexte de la présente invention.

On comprend à la lecture des figures 1 et 2 que la bouche d'admission 201 du bloc de distribution est, selon l'exemple illustré ici, formée en regard de l'échangeur de chaleur 252 est cette bouche d'admission 201 est donc référencée schématiquement sur la figure 2.

Le volume interne 205 du bloc de distribution 200 comprend également au moins un canal d'air froid 260, un canal d'air chaud 270, une chambre de mélange 280 et au moins un moyen de guidage 290 du flux d'air FA. Tel qu'illustré, le canal d'air froid 260 s'étend entre la bouche d'admission 201 et une première entrée 281 de la chambre de mélange 280, le canal d'air chaud 270 s'étend entre le moyen de traitement thermique 250 et une deuxième entrée 282 de la chambre de mélange 280. Selon l'exemple illustré, le moyen de guidage 290 est dans une position dans laquelle il n'autorise que le flux d'air issu du canal d'air chaud 270 à rejoindre la chambre de mélange 280. Avantageusement, ce moyen de guidage 290 est mobile et peut prendre différentes positions dans lesquelles il autorise au non l'air circulant dans le canal d'air froid 260 et dans le canal d'air chaud 270 à rejoindre la chambre de mélange 280. La première sortie d'air 210 et la deuxième sortie d'air 220 sont quant à elles formées dans une portion de la paroi périphérique 206 qui délimite la chambre de mélange 280.

Tel que représenté, le volet réglable 204 évoqué précédemment est reçu dans la chambre de mélange 280. Ce volet réglable 204 permet de diriger l'air présent dans la chambre de mélange 280 vers l'une des sorties d'air 210, 220, 230 et est plus amplement détaillé ci-dessous en référence à la figure 4.

Tel que représenté, la bouche d'admission 201, la première entrée 281 de la chambre de mélange 280 et la deuxième entrée de la chambre de mélange 282 sont disposées dans cet ordre le long de la direction transversale, c'est-à-dire le long de la direction d'extension principale d'au moins l'un des bords courts qui participent à délimiter la première sortie d'air 210. Également, la bouche d'admission 201, la première sortie d'air 210 et la deuxième sortie d'air 220 sont disposées dans cet ordre le long de la direction transversale, c'est-à-dire le long de la direction d'extension principale d'au moins l'un des bords courts qui participent à délimiter la première sortie d'air 210.

Selon un mode de fonctionnement illustré, le flux d'air FA généré par le dispositif de ventilation rejoint le volume interne 205 du bloc de distribution 200 par la bouche d'admission 201 et arrive ainsi dans le canal d'air froid 260. Selon la position du moyen de guidage 290 illustrée, la totalité de ce flux d'air FA est ensuite dirigée vers le moyen de traitement thermique 250 au sein duquel il capte des calories issues du fluide caloporteur qui circule dans ce moyen de traitement thermique 250 de sorte à être réchauffé. En quittant le moyen de traitement thermique 250, le flux d'air FA rejoint ainsi le canal d'air chaud 270, avant de rejoindre la chambre de mélange 280 par sa deuxième entrée 282. Une fois dans la chambre de mélange 280 et selon la position du volet réglable 204 représentée sur la figure 2, une première partie de ce flux d'air FA quitte le bloc de distribution 200 par la première sortie 210 selon la première direction FA1 et une deuxième partie de ce flux d'air FA quitte le bloc de distribution 200 par la deuxième sortie 220 selon la deuxième direction FA2.

Selon un autre mode de fonctionnement, le moyen de guidage 290 peut être dans une position dans laquelle seule une partie du flux d'air FA qui quitte le canal d'air froid 260 traverse le moyen de traitement thermique 250 pour rejoindre le canal d'air chaud 270 puis la chambre de mélange 280 et dans laquelle une autre partie du flux d'air FA - illustrée en traits discontinus - qui quitte le canal d'air froid 260 rejoint directement la chambre de mélange 280 par la première entrée 281. Il en résulte la formation d'un flux d'air mélangé FAe - représenté en traits discontinus - dans la chambre de mélange 280. Dès lors, selon la position du volet réglable 204 représentée sur la figure 2, une première partie de ce flux d'air mélangé FAe quitte le bloc de distribution 200 par la première sortie 210 selon la première direction FA1 et une deuxième partie de ce flux d'air mélangé FAe quitte le bloc de distribution 200 par la deuxième sortie 220 selon la deuxième direction FA2.

La deuxième sortie 220 étant plus proche du canal d'air chaud que la première sortie 210, la présence de l'écope 215 évoquée ci-dessus et dont le fonctionnement sera plus amplement détaillé ci-dessous, permet d'homogénéiser la température de la première partie du flux d'air mélangé FAe et de la deuxième partie du flux d'air mélangé FAe afin d'obtenir une température homogène au sein de l'habitacle du véhicule équipé de l'installation selon l'invention.

Selon encore un autre mode de fonctionnement non illustré ici, le moyen de guidage 290 peut être dans une position dans laquelle il obture la deuxième entrée 282 de la chambre de mélange 280 de sorte que la totalité du flux d'air FA qui quitte le canal d'air froid 260 puisse rejoindre la chambre de mélange 280.

La figure 3 est une vue partielle, en perspective, du bloc de distribution 200 de l'installation de ventilation, chauffage et/ou climatisation selon l'invention. Cette figure 3 est plus particulièrement une vue rapprochée des première, deuxième et troisième sorties d'air formées dans ce bloc de distribution 200. Tel qu'évoqué ci-dessus, la figure 3 illustre l'au moins une écope 215 agencée en travers de la première sortie 210. Selon l'exemple illustré, une première écope 215 et une deuxième écope 219 sont plus particulièrement agencées en travers de la première sortie d'air 210.

La description qui suit concerne la première écope 215 mais elle s'applique, *mutatis mutandis,* à la deuxième écope 219.

Tel que représenté, la première écope 215 - ci-après appelée « écope 215 » - s'étend majoritairement selon une direction parallèle, ou sensiblement parallèle, aux bords courts 213, 214 qui participent à délimiter la première sortie d'air 210, entre les deux bords longs 211, 212 qui participent également à délimiter cette première sortie d'air 210. Plus particulièrement, l'écope 215 s'étend depuis l'un des bords longs 211 et jusqu'à l'autre de ces bords longs 212, de sorte qu'elle est en contact avec chacun de ces bords longs 211, 212. Enfin, on note que l'écope 215 est positionnée dans le prolongement de l'un des bords longs 221, 222 qui participent à délimiter la deuxième sortie d'air 220. Également, cet écope 215 est agencée dans le prolongement du canal 225 évoqué précédemment et qui débouche sur la deuxième sortie d'air 220. Cette écope 215 est configurée pour diriger une partie du flux d'air qui circule dans la chambre de mélange du bloc de distribution 200 vers le canal 225 et donc vers la deuxième sortie d'air 220 formée à l'extrémité libre de ce canal 225. Avantageusement, cette écope 215 est positionnée à fleur de la première sortie d'air 210. Autrement dit, la position de cette écope 215 est choisie de sorte que le guidage du flux d'air vers la deuxième sortie d'air 220 soit réalisé au dernier moment, c'est-à-dire juste avant que le flux d'air ne quitte le volume interne du bloc de distribution, et pour que ce guidage s'applique à l'ensemble du flux d'air présent dans la chambre de mélange. Un tel agencement est particulièrement avantageux lorsque le flux d'air présent dans la chambre de mélange est un flux d'air mélangé.

Tel qu'évoqué précédemment, la deuxième sortie d'air 220 est plus proche du canal d'air chaud que la première sortie d'air 210, tandis que cette première sortie d'air 210 est plus proche du canal d'air froid, de sorte que lorsque le flux d'air dans la chambre de mélange est un flux d'air mélangé, il peut exister un phénomène de stratification qui résulte en une différence de température significative entre la première partie du flux d'air mélangé qui quitte le bloc de distribution par la première sortie 210 et la deuxième partie de ce flux d'air mélangé qui quitte le bloc de distribution par la deuxième sortie 220. La position - décrite ci-dessus - et la forme - décrite ci-après en référence à la figure 4 - de cette écope 215 permettent de diriger le flux d'air vers le canal 225 et donc vers la deuxième sortie d'air 220 au dernier moment, c'est-à-dire à instant auquel la température du flux d'air circulant dans le volume interne du bloc de distribution 200 est la plus homogène. Autrement dit, cette écope 215 permet d'adapter le comportement aérothermique de l'installation aux phénomènes de stratification et donc elle permet de mieux maîtriser la température de chacun des flux d'air qui quittent le bloc de distribution 200 et, in fine, de mieux maîtriser la température générale de l'habitacle du véhicule.

Cette figure 3 montre également une première paroi de séparation 240 et une deuxième paroi de séparation 241 qui séparent, respectivement, une sortie centrale 216 adaptée pour être reliée à l'aérateur central du véhicule d'une première sortie latérale 217 adaptée pour être reliée à un premier aérateur latéral du véhicule et la sortie centrale 216 d'une deuxième sortie latérale 218 adaptée pour être reliée à un deuxième aérateur latéral. Les deux parois de séparation 240, 241 s'étendent, respectivement, selon une direction parallèle aux bords courts 213, 214 qui participent à délimiter la première sortie d'air 210, au moins entre les deux bord longs 211, 212 qui participent également à délimiter cette première sortie d'air 210. Également, ces parois de séparation 240, 241 s'étendent, au moins en partie dans le volume interne du bloc de distribution 200. Autrement dit, ces parois de séparation 240, 241 s'étendent, respectivement, dans des plans transversaux, avantageusement perpendiculaires, au plan d'extension principal P1 de la section de la première sortie d'air 211. Il est entendu qu'il ne s'agit que d'un exemple de réalisation de l'invention et le bloc de distribution comprend au moins une première paroi de séparation selon l'invention.

Selon l'exemple illustré, au moins deux écopes 215, 219 sont agencées en travers de la première sortie 210, une première écope 215 étant agencée entre la sortie centrale 216 et la première sortie latérale 217 et une deuxième écope 216 étant agencée entre la sortie centrale 216 et la deuxième sortie latérale 218. Tel que représenté, la première écope 215 fait ainsi saillie de la première paroi de séparation 240 qui est agencée dans le prolongement de l'un des bords courts 223 qui participent à délimiter la deuxième sortie d'air 220 et la deuxième écope 219 fait quant à elle saillie de la deuxième paroi de séparation 241 qui est agencée dans le prolongement de l'autre de ces bords courts 224. Autrement dit, une première distance d1 mesurée entre les deux parois de séparation 240, 241 est équivalente à une deuxième distance d2 mesurée entre les deux bords courts 223, 224 qui participent à délimiter la deuxième sortie d'air 220, selon un axe perpendiculaire à au moins un de ces bords courts 223, 224.

Avantageusement, la première écope 215 et la deuxième écope 219 peuvent être issues de matière avec la paroi de séparation 240, 241 dont elles font saillie. En d'autres termes, la première écope 215 et la première paroi de séparation 240 forment un unique ensemble qui ne peut être séparé sans entrainer la détérioration d'au moins l'une d'entre elles et la deuxième écope 219 et la deuxième paroi de séparation 241 forment quant à elles également un unique ensemble qui ne peut être séparé sans entrainer la détérioration d'au moins l'une d'entre elles. Il est entendu que les parois de séparation et les écopes pourraient être rendus solidaires deux à deux par des moyens rapportés, tels que de la colle ou des vis par exemple, sans sortir du contexte de la présente invention. Ainsi, chaque écope 215, 219 s'étend, d'une part entre les deux bords longs 211, 212 qui participent à délimiter la première sortie d'air 210 et au contact de ceux-ci et d'autre part, entre l'une des parois de séparation 240, 241 et un bord libre 315, 319 qui délimite l'écope. Tel que représenté, le bord libre 315, 319 de chaque écope 215, 219 s'étend parallèlement aux bords courts 213, 214 qui participent à délimiter la première sortie d'air 210.

Particulièrement, l'ensemble « écope et paroi de séparation » prend une forme générale en L dont une branche est formée par l'écope et dont l'autre branche est forme par la paroi de séparation correspondante.

Selon l'exemple illustré sur les figures, les écopes 215, 219 sont agencées de sorte qu'un rapport entre une section de ces deux écopes 215, 219 et une section de la première sortie d'air 210 mesurée entre les bords longs 211, 212 et les deux parois de séparation 240, 241 est compris entre 0,13 et 0,20. Également, selon l'exemple illustré, un rapport entre la section des deux écopes 215, 219 et une section de la première sortie d'air 210 mesurée entre les bords longs 211, 212 et les bords courts 213, 214 de cette première sortie d'air 210 est compris entre 0,07 et 0,12.

Enfin, la figure 4 est une vue de détail, prise sur la figure 2, d'une partie de la zone de mélange 280, cette vue de détail rendant particulièrement visibles la première sortie d'air 210, la deuxième sortie d'air 220, la troisième sortie d'air 230, l'une des écopes 215 et le volet réglable 204 précédemment évoqué.

Ce volet réglable 204 est ainsi reçu dans la chambre de mélange 280 et peut prendre au moins deux positions de ce volet réglable 204. Ainsi, ce volet réglable 204 peut prendre une première position A1 dans laquelle le flux d'air qui circule dans la chambre de mélange 280 est dirigé vers la première sortie d'air 210 et vers la deuxième sortie d'air 220, c'est-à-dire que le volet réglable 204 obstrue la troisième sortie d'air 230 et une deuxième position A2 dans laquelle le flux d'air qui circule dans la chambre de mélange 280 est dirigé vers la troisième sortie d'air 230, c'est-à-dire qu'il obstrue la première sortie d'air 210 et le canal 225 qui débouche sur la deuxième sortie d'air 220. Il est entendu que ce volet réglable 204 peut également prendre n'importe quelle position intermédiaire entre la première position A1 et la deuxième position A2 sans sortir du contexte de la présente invention.

La suite de la description se rapporte plus particulièrement au mode de fonctionnement dans lequel le moyen de guidage est positionné de sorte à ce que le flux d'air mélangé FAe, c'est-à-dire un mélange entre du flux d'air issu du canal d'air froid et du flux d'air issu du canal d'air chaud, circule dans la chambre de mélange 280. En effet, tel qu'évoqué précédemment, il s'agit du mode de fonctionnement dans lequel la présence de l'écope 215 est la plus intéressante.

Tel qu'évoqué ci-dessus, l'écope 215 est configurée pour diriger une partie du flux d'air mélangé FAe vers la deuxième sortie d'air 220 de sorte que la première partie du flux d'air mélangé FAe qui quitte la chambre de mélange 280 par la première sortie 210 et la deuxième partie du flux d'air mélangé FAe qui quitte la chambre de mélange 280 par la deuxième sortie 220 présentent des températures homogènes. A cet effet, l'écope 215 présente une forme courbée. Cette forme courbée est ici concave, vue depuis le volume interne du bloc de distribution 200, c'est-à-dire vue depuis la chambre de mélange 280. Ainsi, une partie du flux d'air mélangé FAe qui arrive au niveau de la première sortie d'air 210 selon la première direction FA1 décrite ci-dessus, vient en butée sur l'écope 215 et suit la courbe de cette écope 215, en direction de la deuxième sortie d'air 220. Autrement dit, cette écope 215 permet de modifier le sens de déplacement d'une partie du flux d'air mélangé FAe pour que cette dernière se déplace selon le deuxième sens de déplacement FA2 et puisse ainsi rejoindre le canal 225 pour quitter le bloc de distribution 200 par la deuxième sortie d'air 220. On note que l'écope 215 s'étend d'un bord long à l'autre de la première sortie d'air 210, si bien que cette écope 215 capte autant le flux d'air mélangé FAe qui est à proximité du premier bord long 211 de la première sortie d'air 210 que le flux d'air mélangé FAe qui est à proximité du deuxième bord long 212 de cette première sortie d'air 210.

Cette figure 4 montre encore la première paroi de séparation 240 décrite précédemment et qui permet de séparer la sortie centrale de la première sortie latérale. Enfin, on remarque que, selon l'exemple illustré, l'écope 215 est issue de matière avec la paroi périphérique 206 du bloc de distribution 200, c'est-à-dire que cette écope 215 et cette paroi périphérique 206 forment un unique ensemble et qu'elles ne peuvent être séparées sans entrainer la détérioration de l'écope 215 et/ou de la paroi périphérique 206.

La présente invention propose ainsi un moyen simple et peu coûteux qui permet de répartir le flux d'air vers les différentes sorties d'air d'une installation de ventilation, chauffage et/ou climatisation d'un véhicule automobile, en tenant compte du phénomène de stratification qui tend à complexifier la gestion aérothermique d'une telle installation.

## Revendications

1. Installation (100) de ventilation, chauffage et/ou climatisation pour un véhicule, comprenant au moins un bloc de distribution (200) destiné à être parcouru par un flux d'air (FA), le bloc de distribution (200) comprenant au moins un moyen de traitement thermique (250) du flux d'air (FA), une chambre de mélange (280), un conduit d'air froid (260) qui s'étend d'une bouche d'admission d'air (201) dans le bloc de distribution (200) à une première entrée (281) de la chambre de mélange (280) et un conduit d'air chaud (270) qui s'étend du moyen de traitement thermique (250) à une deuxième entrée (282) de la chambre de mélange (280), le bloc de distribution (200) comprenant au moins une première sortie d'air (210) et au moins une deuxième sortie d'air (220) aérauliquement raccordées à la chambre de mélange (280), la première sortie d'air (210) et la deuxième sortie d'air (220) étant respectivement délimitées par au moins deux bords longs (211, 212, 221, 222) et par au moins deux bords courts (213, 214, 223, 224) sensiblement perpendiculaires aux deux bords longs (211, 212, 221, 222), la bouche d'admission d'air (201), la première entrée (281) dans la chambre de mélange (280) et la deuxième entrée (282) dans la chambre de mélange (280) étant disposées dans cet ordre le long d'une direction d'extension principale d'au moins l'un des bords courts (213, 214) qui participent à délimiter la première sortie d'air (210), la bouche d'admission d'air (201), la première sortie d'air (210) et la deuxième sortie d'air (220) étant disposées dans cet ordre le long de la direction d'extension principale d'au moins l'un des bords courts (213, 214) qui participent à délimiter la première sortie d'air (210), l'installation (100) de ventilation, chauffage et/ou climatisation comprenant au moins une première écope (215, 219) agencée en travers de la première sortie d'air (210) en s'étendant d'un bord long (211) à l'autre bord long (212) de la première sortie (210), l'écope (215, 219) étant configurée pour guider un flux d'air mélangé (FAe) vers la deuxième sortie d'air (220),
la première sortie d'air (210) étant séparée en une sortie centrale (216) destinée à alimenter un aérateur central du véhicule et en au moins une première sortie latérale (217, 218) destinée à alimenter un aérateur latéral du véhicule,
l'installation (100) de ventilation, chauffage et/ou climatisation étant **caractérisée en ce que** l'écope (215, 219) est agencée dans le prolongement d'au moins un des bords longs (221, 222) de la deuxième sortie d'air (220), la sortie centrale (216) est séparée de la première sortie latérale (217, 218) par une première paroi de séparation (240, 241) qui s'étend dans un plan sécant à un plan d'extension principal de l'écope (215, 219), la première paroi de séparation (240, 241) s'étendant entre les deux bords longs (211, 212) qui participent à délimiter la première sortie d'air (210), dans laquelle l'écope (215, 219) fait saillie de la première paroi de séparation (240, 241) et dans laquelle la première paroi de séparation (240, 241) est agencée dans le prolongement d'au moins un des bords courts (223, 224) de la deuxième sortie d'air (220).

2. Installation (100) de ventilation, chauffage et/ou climatisation selon la revendication précédente, dans laquelle l'écope (215, 219) présente au moins un bord libre (315, 319) qui s'étend principalement selon une direction perpendiculaire aux bords longs (211, 212) de la première sortie d'air (210).

3. Installation (100) de ventilation, chauffage et/ou climatisation selon l'une quelconque des revendications précédentes, dans laquelle le bloc de distribution (200) est configuré pour qu'une première partie du flux d'air mélangé (FAe) sorte par la première sortie d'air (210) selon une première direction (FA1), tandis qu'une deuxième partie du flux d'air mélangé (FAe) sort par la deuxième sortie d'air (220) selon une deuxième direction (FA2), la première direction (FA1) étant sécante à la deuxième direction (FA2).

4. Installation de ventilation, chauffage et/ou climatisation selon la revendication précédente, dans laquelle la première direction (FA1) de la première partie du flux d'air mélangé (FAe) est transversale à un plan dans lequel s'inscrivent les deux bords longs (211, 212) et les deux bords courts (213, 214) qui participent à délimiter la première sortie d'air (210).

5. Installation (100) de ventilation, chauffage et/ou climatisation selon l'une quelconque des revendications précédentes, dans laquelle l'écope (215, 219) présente une forme concave, vue depuis un volume interne (205) du bloc de distribution (200) de l'installation (100) de ventilation, chauffage et/ou climatisation.

6. Installation (100) de ventilation, chauffage et/ou climatisation selon l'une quelconque des revendications précédentes, comprenant au moins deux parois de séparation (240, 241), la première paroi de séparation (240) délimitant la sortie centrale (216) destinée à alimenter l'aérateur central du véhicule de la première sortie latérale (217) destinée à alimenter un premier aérateur latéral du véhicule et une deuxième paroi de séparation (241) délimitant la sortie centrale (216) d'une deuxième sortie latérale (218) destinée à alimenter un deuxième aérateur latéral du véhicule.

7. Installation (100) de ventilation, chauffage et/ou climatisation selon la revendication précédente, comprenant au moins deux écopes (215, 219), la première écope (215) faisant saillie de la première paroi de séparation (240) et une deuxième écope (219) faisant saillie de la deuxième paroi de séparation (241), et dans laquelle un ratio entre une section des deux écopes (215, 219) et une section de la première sortie d'air (210) mesurée entre les bords longs (211, 212) et les deux parois de séparation (240, 241) est compris entre 0,13 et 0,20.

## Patentansprüche

1. Heizungs-, Belüftungs- und/oder Klimaanlage (100) für ein Fahrzeug, umfassend mindestens einen Verteilerblock (200), der dazu bestimmt ist, von einem Luftstrom (FA) durchströmt zu werden, wobei der Verteilerblock (200) mindestens ein thermisches Behandlungsmittel (250) für den Luftstrom (FA), eine Mischkammer (280), einen Kaltluftkanal (260), der sich von einer Lufteinlassöffnung (201) in den Verteilerblock (200) zu einem ersten Einlass (281) der Mischkammer (280) erstreckt, und einen Warmluftkanal (270) umfasst, der sich von dem thermischen Behandlungsmittel (250) zu einem zweiten Einlass (282) der Mischkammer (280) erstreckt, wobei der Verteilerblock (200) mindestens einen ersten Luftauslass (210) und mindestens einen zweiten Luftauslass (220) umfasst, die strömungstechnisch mit der Mischkammer (280) verbunden sind, wobei der erste Luftauslass (210) und der zweite Luftauslass (220) jeweils durch mindestens zwei Längskanten (211, 212, 221, 222) und durch mindestens zwei Querkanten (213, 214, 223, 224), die im Wesentlichen senkrecht zu den beiden Längskanten (211, 212, 221, 222) verlaufen, begrenzt sind, wobei die Lufteinlassöffnung (201), der erste Einlass (281) in die Mischkammer (280) und der zweite Einlass (282) in die Mischkammer (280) in dieser Reihenfolge entlang einer Haupterstreckungsrichtung mindestens einer der Querkanten (213, 214), die zur Begrenzung des ersten Luftauslasses (210) beitragen, angeordnet sind, wobei die Lufteinlassöffnung (201), der erste Luftauslass (210) und der zweite Luftauslass (220) in dieser Reihenfolge entlang der Haupterstreckungsrichtung mindestens einer der Querkanten (213, 214), die zur Begrenzung des ersten Luftauslasses (210) beitragen, angeordnet sind, wobei die Heizungs-, Belüftungs- und/oder Klimaanlage (100) mindestens ein erstes Luftleitelement (215, 219) umfasst, das quer über den ersten Luftauslass (210) angeordnet ist und sich von einer Längskante (211) zur anderen Längskante (212) des ersten Auslasses (210) erstreckt, wobei das Luftleitelement (215, 219) dazu konfiguriert ist, einen Mischluftstrom (FAe) zum zweiten Luftauslass (220) zu leiten, wobei der erste Luftauslass (210) in einen mittleren Auslass (216), der dazu bestimmt ist, eine mittlere Belüftungsdüse des Fahrzeugs zu versorgen, und in mindestens einen ersten seitlichen Auslass (217, 218), der dazu bestimmt ist, eine seitliche Belüftungsdüse des Fahrzeugs zu versorgen, unterteilt ist, wobei die Heizungs-, Belüftungs- und/oder Klimaanlage (100) **dadurch gekennzeichnet ist, dass** das Luftleitelement (215, 219) in der Verlängerung mindestens einer der Längskanten (221, 222) des zweiten Luftauslasses (220) angeordnet ist, der mittlere Auslass (216) von dem seitlichen Auslass (217, 218) durch eine erste Trennwand (240, 241) getrennt ist, die sich in einer Ebene erstreckt, die eine Haupterstreckungsebene des Luftleitelements (215, 219) schneidet, wobei sich die erste Trennwand (240, 241) zwischen den beiden Längskanten (211, 212) erstreckt, die zur Begrenzung des ersten Luftauslasses (210) beitragen, wobei das Luftleitelement (215, 219) von der ersten Trennwand (240, 241) vorsteht und wobei die erste Trennwand (240, 241) in der Verlängerung mindestens einer der Querkanten (223, 224) des zweiten Luftauslasses (220) angeordnet ist.

2. Heizungs-, Belüftungs- und/oder Klimaanlage (100) nach dem vorhergehenden Anspruch, wobei das Luftleitelement (215, 219) mindestens eine freie Kante (315, 319) aufweist, die sich hauptsächlich in einer Richtung senkrecht zu den Längskanten (211, 212) des ersten Luftauslasses (210) erstreckt.

3. Heizungs-, Belüftungs- und/oder Klimaanlage (100) nach einem der vorhergehenden Ansprüche, wobei der Verteilerblock (200) so konfiguriert ist, dass ein erster Teil des Mischluftstroms (FAe) durch den ersten Luftauslass (210) in einer ersten Richtung (FA1) austritt, während ein zweiter Teil des Mischluftstroms (FAe) durch den zweiten Luftauslass (220) in einer zweiten Richtung (FA2) austritt, wobei die erste Richtung (FA1) die zweite Richtung (FA2) schneidet.

4. Heizungs-, Belüftungs- und/oder Klimaanlage nach dem vorhergehenden Anspruch, wobei die erste Richtung (FA1) des ersten Teils des Mischluftstroms (FAe) quer zu einer Ebene verläuft, in der die beiden Längskanten (211, 212) und die beiden Querkanten (213, 214) liegen, die zur Begrenzung des ersten Luftauslasses (210) beitragen.

5. Heizungs-, Belüftungs- und/oder Klimaanlage (100) nach einem der vorhergehenden Ansprüche, wobei das Luftleitelement (215, 219), von einem Innenvolumen (205) des Verteilerblocks (200) der Heizungs-, Belüftungs- und/oder Klimaanlage (100) aus betrachtet, eine konkave Form aufweist.

6. Heizungs-, Belüftungs- und/oder Klimaanlage (100) nach einem der vorhergehenden Ansprüche, umfassend mindestens zwei Trennwände (240, 241), wobei die erste Trennwand (240) den mittleren Auslass (216), der dazu bestimmt ist, die mittlere Belüftungsdüse des Fahrzeugs zu versorgen, von dem ersten seitlichen Auslass (217) abgrenzt, der dazu bestimmt ist, eine erste seitliche Belüftungsdüse des Fahrzeugs zu versorgen, und eine zweite Trennwand (241), die den mittleren Auslass (216) von einem zweiten seitlichen Auslass (218) abgrenzt, der dazu bestimmt ist, eine zweite seitliche Belüftungsdüse des Fahrzeugs zu versorgen.

7. Heizungs-, Belüftungs- und/oder Klimaanlage (100) nach dem vorhergehenden Anspruch, umfassend mindestens zwei Luftleitelemente (215, 219), wobei das erste Luftleitelement (215) von der ersten Trennwand (240) vorsteht und ein zweites Luftleitelement (219) von der zweiten Trennwand (241) vorsteht, und wobei ein Verhältnis zwischen einem Querschnitt der beiden Luftleitelemente (215, 219) und einem Querschnitt des ersten Luftauslasses (210), gemessen zwischen den Längskanten (211, 212) und den beiden Trennwänden (240, 241), zwischen **0,13** und **0,20** liegt.

## Claims

1. Heating, ventilation and/or air conditioning installation (100) for a vehicle, comprising at least one distribution block (200) intended to be traversed by an air flow (FA), the distribution block (200) comprising at least one thermal treatment means (250) for the air flow (FA), a mixing chamber (280), a cold air duct (260) which extends from an air intake (201) in the distribution block (200) to a first inlet (281) of the mixing chamber (280) and a hot air duct (270) which extends from the thermal treatment means (250) to a second inlet (282) of the mixing chamber (280), the distribution block (200) comprising at least a first air outlet (210) and at least a second air outlet (220) aeraulically connected to the mixing chamber (280), the first air outlet (210) and the second air outlet (220) being respectively delimited by at least two long edges (211, 212, 221, 222) and by at least two short edges (213, 214, 223, 224) substantially perpendicular to the two long edges (211, 212, 221, 222), the air intake (201), the first inlet (281) into the mixing chamber (280) and the second inlet (282) into the mixing chamber (280) being arranged in this order along a main extension direction of at least one of the short edges (213, 214) which participate in delimiting the first air outlet (210), the air intake (201), the first air outlet (210) and the second air outlet (220) being arranged in this order along the main extension direction of at least one of the short edges (213, 214) which participate in delimiting the first air outlet (210), the heating, ventilation and/or air conditioning installation (100) comprising at least a first scoop (215, 219) arranged across the first air outlet (210) extending from one long edge (211) to the other long edge (212) of the first outlet (210), the scoop (215, 219) being configured to guide a mixed air flow (FAe) towards the second air outlet (220), the first air outlet (210) being separated into a central outlet (216) intended to supply a central air vent of the vehicle and into at least a first lateral outlet (217, 218) intended to supply a lateral air vent of the vehicle, the heating, ventilation and/or air conditioning installation (100) being **characterized in that** the scoop (215, 219) is arranged in the extension of at least one of the long edges (221, 222) of the second air outlet (220), the central outlet (216) is separated from the lateral outlet (217, 218) by a first separation wall (240, 241) which extends in a plane intersecting a main extension plane of the scoop (215, 219), the first separation wall (240, 241) extending between the two long edges (211, 212) which participate in delimiting the first air outlet (210), wherein the scoop (215, 219) protrudes from the first separation wall (240, 241) and wherein the first separation wall (240, 241) is arranged in the extension of at least one of the short edges (223, 224) of the second air outlet (220).

2. Heating, ventilation and/or air conditioning installation (100) according to the preceding claim, wherein the scoop (215, 219) has at least one free edge (315, 319) which extends mainly in a direction perpendicular to the long edges (211, 212) of the first air outlet (210).

3. Heating, ventilation and/or air conditioning installation (100) according to any of the preceding claims, wherein the distribution block (200) is configured so that a first portion of the mixed air flow (FAe) exits through the first air outlet (210) in a first direction (FA1), while a second portion of the mixed air flow (FAe) exits through the second air outlet (220) in a second direction (FA2), the first direction (FA1) intersecting the second direction (FA2).

4. Heating, ventilation and/or air conditioning installation according to the preceding claim, wherein the first direction (FA1) of the first portion of the mixed air flow (FAe) is transverse to a plane in which lie the two long edges (211, 212) and the two short edges (213, 214) which participate in delimiting the first air outlet (210).

5. Heating, ventilation and/or air conditioning installation (100) according to any of the preceding claims, wherein the scoop (215, 219) has a concave shape, viewed from an internal volume (205) of the distribution block (200) of the heating, ventilation and/or air conditioning installation (100).

6. Heating, ventilation and/or air conditioning installation (100) according to any of the preceding claims, comprising at least two separation walls (240, 241), the first separation wall (240) delimiting the central outlet (216) intended to supply the central air vent of the vehicle from the first lateral outlet (217) intended to supply a first lateral air vent of the vehicle, and a second separation wall (241) delimiting the central outlet (216) from a second lateral outlet (218) intended to supply a second lateral air vent of the vehicle.

7. Heating, ventilation and/or air conditioning installation (100) according to the preceding claim, comprising at least two scoops (215, 219), the first scoop (215) protruding from the first separation wall (240) and a second scoop (219) protruding from the second separation wall (241), and wherein a ratio between a cross-section of the two scoops (215, 219) and a cross-section of the first air outlet (210) measured between the long edges (211, 212) and the two separation walls (240, 241) is between 0.13 and 0.20.
